# EUROPÄISCHE PATENTSCHRIFT

(11) **EP 0 585 481 B1**
(45) Veröffentlichungstag und Bekanntmachung des Hinweises auf die Patenterteilung: **10.01.1996**
(21) Anmeldenummer: 92114861.5
(22) Anmeldetag: 31.08.1992
(51) Int. Cl.: H01S 3/03

(54) **Bandleiterlaser-Resonator**
Slab laser resonator
Résonateur d'un laser à ruban

(43) Veröffentlichungstag der Anmeldung: 09.03.1994
(73) Patentinhaber: CARL ZEISS JENA GmbH, D-07745 Jena (DE)
(72) Erfinder: Welsch, Wolfgang, Dr.-Ing., W-8011 Baldham (DE); Krüger, Hans, Dipl.-Phys., W-8000 München 83 (DE); Mammach, Peter, W-8025 Unterhaching (DE); Hübner, Klemens, Dipl.-Ing. (FH), W-8012 Ottobrunn (DE); Arndt, Karlheinz, Dipl.-Ing. (FH), W-8000 München 83 (DE)
(74) Vertreter: Muhsfeldt, Willi

(56) Entgegenhaltungen:
- EP-A- 0 477 865
- EP-A- 0 477 880
- PATENT ABSTRACTS OF JAPAN vol. 13, no. 201 (E-757)(3549) 12. Mai 1989;& JP-A-1022079
- PATENT ABSTRACTS OF JAPAN vol. 9, no. 315 (E-365)(2038) 11. Dezember 1985;& JP-A-60147184
- PATENT ABSTRACTS OF JAPAN vol. 3, no. 71 (E-118)(131) 20. Juni 1979;& JP-A-54051398

## Beschreibung

Die Erfindung betrifft einen hochfrequenzangeregten diffusionsgekühlten Bandleiterlaser mit zwei mit Mitteln zur Kühlung und mit Mitteln zur gegenseitigen Fixierung versehenen Metallelektroden, zwischen denen ein Entladungsspalt gebildet ist, mit einem instabilen Resonator, dessen erster Resonatorspiegel mit der Basiselektrode fest verbunden ist, mit einem aus einer ersten und zweiten Stirnplatte und einer damit vakuumdicht verbundenen Außenwand zusammengesetzten Gehäuse, wobei die Basiselektrode mit der ersten Stirnplatte fest verbunden ist. Ein derartiger Bandleiterlaser ist aus der EP-A-0 477 865 bekannt.

Bis vor einigen Jahren standen der Konstruktion eines CO₂-Hochleistungslasers in Kompaktbauweise unüberwindliche Schwierigkeiten entgegen. Bedingt durch die physikalischen Prozesse bei der Laseranregung ist der Wirkungsgrad sehr stark von einer nicht zu hohen Gastemperatur, in der Praxis also von einer effektiven Entfernung überschüssiger Wärme aus dem Lasergas abhängig. Bei diffusionsgekühlten CO₂-Lasern, bei denen die Wärme durch einen stationären Wärmeleitungsprozeß von der heißesten Stelle im Zentrum des Laserplasmas zu den gekühlten Wänden des Entladungsgefäßes transportiert wird, hat sich herausgestellt, daß die Laserausgangsleistung nur von der Länge und nicht vom Durchmesser der Entladung abhängt. In der Folge wurden deshalb einerseits aufwendige Faltungskonzepte entwickelt, um trotz Leistungen bis den kW-Bereich hinein kompakte Abmessungen des Lasers beizubehalten, andererseits wurden schnell geströmte, also konvektionsgekühlte Laser entwickelt. Schnell geströmte Laser der Leistungsklasse 500 bis über 10.000 W sind derzeit kommerziell erhältlich. Diese nicht für einen abgeschlossenen ("sealed-off") Betrieb vorgesehenen Laser sind jedoch voluminös, haben ein hohes leistungsspezifisches Gewicht und sind auf eine kostenungünstige externe Gasversorgung und auf Pumpen für schnelle Gasumwälzung angewiesen.

Aus den genannten Gründen waren bisher nur sogenannte Wellenleiterlaser mit Leistungen bis zu 200 W als kompakte diffusionsgekühlte CO₂-Laser erhältlich. Inzwischen sind jedoch beispielsweise aus der EP-A-0 305 893 die Grundlagen eines Bandleiterlasers bekannt, dessen Entladungsraum im Gegensatz zum Wellenleiterlaser keinen quadratischen Querschnitt aufweist, sondern der auf flächenhaften, zur Seite hin offenen Wellenleiterstrukturen basiert. Die Kombination eines derartigen, quasi eindimensionalen Wellenleiters mit einem instabilen Resonator in orthogonaler Richtung ermöglicht dabei eine beugungsbegrenzte Grundmode-Laserstrahlung. Bei diesem Bandleiterkonzept wird die Wärme großflächig von den eng benachbarten Elektroden aufgenommen, von wo sie dann mit Hilfe geeigneter Kühlflüssigkeiten abgeführt wird. Es ist deshalb nicht mehr notwendig, das Lasergas selbst mit einem besonderen Kühlkreislauf durch den Entladungsraum zu pumpen.

Zum Stand der Bandleiterlasertechnik wird auf den Artikel von R. Nowack et al, "Diffusionsgekühlte CO₂-Hochleistungslaser in Kompaktbauweise" in "Laser und Optoelektronik", 23 (3)/ 1991 hingewiesen. Bisher standen der Umsetzung des obenbeschriebenen Bandleiterlaserkonzepts in eine praxistaugliche Konstruktion noch erhebliche Schwierigkeiten entgegen. Als besonders problematisch stellte sich die Auswahl eines geeigneten Elektrodenmaterials und die Sicherstellung der mechanischen Stabilität des Resonator-aufbaus gegenüber thermischen Belastungen heraus. Zur Lösung des erstgenannten Problemkreises wird auf die am gleichen Tag wie die vorliegende Anmeldung eingereichte Patentanmeldung EP-A-0585482 mit dem Titel "Bandleiterlaser mit Verbundelektroden" hingewiesen.

Die Aufgabe der Erfindung besteht in der Schaffung eines Lasers der eingangsgenannten Art, mit dem ohne großen konstruktiven Aufwand die beschriebenen Nachteile weitgehend vermieden und insbesondere die beiden Resonatorspiegel unabhängig von der Umgebungstemperatur des Lasers und unabhängig von der Wärmebelastung der Laserelektroden und der Resonatorspiegel auf einem konstanten Abstand und in einer konstanten Winkellage zueinander gehalten werden können.

Die Aufgabe wird erfindungsgemäß dadurch gelöst, daß bei einem Bandleiterlaser der eingangs genannten Art mindestens zwei Abstandsstäbe den invarianten Abstand der beiden gegenüberliegenden, mit den Abstandsstäben mittelbar fest verbundenen Resonatorspiegel definieren und die Abstandsstäbe kühlmitteldurchströmt sind.

Weiterbildungen der Erfindung sind Gegenstand von Unteransprüchen.

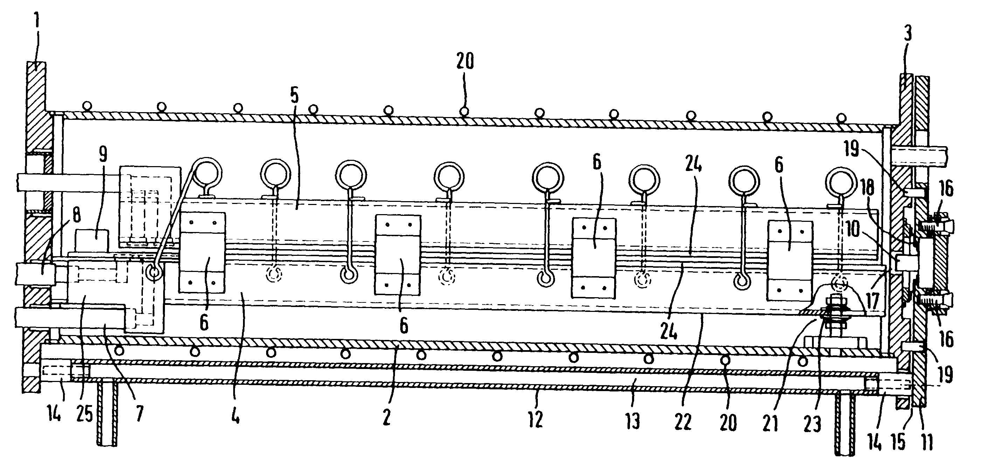

Im folgenden wird die Erfindung anhand zweier Ausführungsbeispiele und der Figur der Zeichnung näher erläutert.

Die einzige Figur zeigt schematisch und im Schnitt eine Ausführungsform eines erfindungsgemäßen Resonator-Aufbaus.

Aufgrund von Signaturberechungen hat sich herausgestellt, daß es zur Erreichung des von den Anwendern vorgegebenen Zieles einer bis auf ± 1 % konstanten Leistungsabgabe des Lasers notwendig ist, die Wärmeausdehnung der Resonatorlänge durch konstruktive Maßnahmen auf höchstens 0,2 µm zu begrenzen, um die für die konstante Leistungsabgabe erforderliche Modenreinheit zu erreichen. Dabei wurden Fertigungstoleranzen von ± 1,5 mm vorausgesetzt. Dieses ehrgeizige Ziel verlangt eine Reihe konstruktiver Maßnahmen, zumal gleichzeitig auch eine Verkippung der Resonatorspiegel verhindert werden soll.

In der Figur ist ein vakuumdichtes Lasergehäuse 1, 2 und 3 dargestellt, das im wesentlichen aus einer ersten Stirnplatte 1, einer vorzugsweise zylinderförmigen Außenwand 2 und einer zweiten Stirnplatte 3 besteht. Die genannten Teile werden vorzugsweise aus Edelstahl gefertigt. Dargestellt ist ferner die fest mit der ersten Stirnplatte 1 verbundene Basiselektrode 4 sowie die über ihr angeordnete HF-Elektrode 5, die miteinander durch Abstandshalter 6 verbunden sind. Beide Elektroden 4 und 5 werden durch den Zu7 und Ablauf 8 von Kühlwasser mit einer Temperatur von ca. 20 bis 25° C effektiv gekühlt, wie es in der oben erwähnten, am gleichen Tag wie die vorliegende Anmeldung eingereichten Anmeldung näher erläutert ist. Auf der Basiselektrode 4, nahe der ersten Stirnplatte 1, steht senkrecht ein zylindrischer Spiegel, dessen Zylinderfläche senkrecht mit einer Toleranz von ± 5 Winkelsekunden zur Basiselektrode ausgerichtet ist. Er bildet den ersten Resonatorspiegel 9.

Der zweite Resonatorspiegel 10 ist fest mit einem Justierflansch 11 verbunden, der wiederum über feststehende Abstandsstäbe 12 mit der ersten Stirnplatte 1 und damit mittelbar mit der Basiselektrode 4 und dem ersten Resonatorspiegel 9 verbunden ist. Die mindestens drei Abstandsstäbe 12 sind aus einem Invar-Hohlstab 13 und zwei außenliegenden Edelstahlrohren 14 zusammengeschweißt. Das an sich schon eine sehr geringe Längenausdehnung aufweisende Invar-Hohlrohr 13 wird zusätzlich, ebenso wie die Stahlrohre 14, wassergekühlt. Durch die kühlmitteldurchströmten, zusammengesetzten Abstandsstäbe 12 lassen sich die verschiedenen für den Resonator-Aufbau relevanten thermischen Ausdehnungswege zu Null kompensieren, vorausgesetzt, die Temperaturen aller zur Abstandsänderung beitragenden Elemente sind entweder genau definiert oder die Elemente selbst weisen einen Ausdehnungskoeffizienten sehr nahe bei Null auf. Die Länge der Stahlrohre 14 ist so zu bemessen, daß ihre aufgrund ihres Längenausdehnungskoeffizienten definierte Ausdehnung die Summe aller übrigen Längenausdehnungen gerade kompensiert. Im einzelnen ergibt eine Berechnung für einen Invar-Hohlstab 13 von 370,5 mm Länge eine notwendige Länge des V2A-Kompensationselementes 14 von 17,5 mm. Dieser Aufbau gewährleistet eine Abstandsänderung der solchermaßen in einem feststehenden Resonatoraufbau eingefügten Resonatorspiegel 9 und 10 von weniger als 0,2 µm. Die Temperaturverteilung und die mechanische Stabilität im Lasergehäuse wird damit gegenüber äußeren Temperatureinflüssen weitgehend unempfindlich. Der feststehende Resonatoraufbau bestimmt durch eine entsprechende Dimensionierung die Abstände der Resonatorspiegel 9 und 10 unabhängig von Temperaturunterschieden und damit verbundenen Verspannungen in der Außenwand 2 des Gehäuses.

Die Kompensation betrifft nicht nur Schwankungen der Außentemperatur, sondern auch der des Kühlwassers. Die Abstandsstäbe 12 werden parallel zu den Elektroden 4 und 5 mit dem gleichen Kühlwasser beschickt. Bei einer Änderung der Kühlwassertemperatur kompensieren sich die Ausdehnungen der Abstandsstäbe 12 mit denen des Abstandes zwischen dem ersten Resonatorspiegel 9 und der ersten Stirnplatte 1, sowie der Strecke zwischen dem zweiten Resonatorspiegel 10 und dem Berührpunkt von Abstandsstab 12 und Justierflansch 11. Eine sich insgesamt immer noch ergebende Abstandsänderung während der Einschwingphase des Lasers aufgrund einer Änderung der Kühlwassertemperatur kann wesentlich verringert werden, in dem die Zeitkonstanten des Aufwärmvorganges der einzelnen Teilstrecken aneinander angeglichen werden. Dazu müssen die Querschnitte der beteiligten gekühlten Elemente genau definiert sein und der Wasserverteiler 25 und die anderen Elemente müssen bezüglich Parameter wie Material, Strömungsgeschwindigkeit etc. aufeinander abgestimmt sein.

In der FIG ist erkennbar, daß die Abstandsstäbe 12 ohne feste Verbindung durch die zweite Stirnplatte 3 hindurchgeführt und fest mit dem dahinter angeordneten Justierflansch 11 verbunden sind, der von der zweiten Stirnplatte 3 durch einen Dehnungsspalt 15 getrennt ist. Da die zweite Stirnplatte 3 in axialer Richtung beweglich, in radialer Richtung aber geführt ist, und da der zweite Resonatorspiegel 10 mit dem Justierflansch 11 fest verbunden ist, ergibt sich insgesamt eine konstante Winkellage der beiden Resonatorspiegel 9 und 10 zueinander. Vorteilhafterweise ist es auf einfache Weise möglich, den zweiten Resonatorspiegel 10 justierbar auszubilden und auf eine für den Laserbetrieb mit dem ersten Resonatorspiegel 9 optimale Lage einzujustieren. Dies kann beispielsweise durch die in der Figur dargestellten Justierschrauben 16 zum Justieren des zweiten Resonatorspiegels 10 am Justierflansch 11 geschehen.

Die zweite Stirnplatte 3 ist gegenüber dem zweiten Resonatorspiegel 10 mit einer Öffnung 17 versehen, so daß es zur Herstellung einer vakuumdichten Verbindung zwischen dem Gehäuseinneren und dem Justerflansch 11 günstig ist, einen in der Figur dargestellten dehnbaren Metallbalg 18 vorzusehen. Der Metallbalg 18 kann beispielsweise aus 0,2 mm dickem Kupfer bestehen. Zur Unterstützung des Balges 18 ist es vorteilhaft, wie in der Figur dargestellt, mindestens einen Paßstift 19 zwischen der zweiten Stirnplatte 3 und dem Justierflansch 11 vorzusehen, damit die zweite Stirnplatte 3 in axialer Richtung gegen den feststehenden Justerflansch 11 beweglich ist. Alternativ zum Paßstift 19 kann auch eine zwischen Justierflansch 11 und der zweiten Stirnplatte 3 angeordnete, die beiden genannten Teile an versetzten Punkten berührende Haltefeder vorgesehen werden, die in der FIG nicht dargestellt ist.

Trotz der effektiven Kühlung der Elektroden 4 und 5 und obwohl die zylindrische Außenwand 2 mit einer Kühlschlange 20 umgeben ist, unterliegt die Außenwand noch einem geringen Temperaturunterschied, dessen mechanische Auswirkungen berücksichtigt werden müssen. Aufgrund des vorgesehenen dehnbaren Balges 18 und des Dehnungsspaltes 15 kann die zylindrische Außenwand 2 bei Wärmeausdehnung in Richtung auf den Justierflansch 11 wandern, während trotzdem der Spiegelabstand konstant bleibt. Es ist günstig, die Basiselektrode 4 gegenüber der zweiten Stirnplatte 3 in radialer Richtung durch eine mit der Außenwand 2 fest und mit der Basiselektrode 4 in axialer Richtung verschieblich verbundene Stütze 21 zu führen. Diese Stütze 21 kann wegen der unterschiedlichen Längenausdehnung von Außenwand 2 und rechteckförmigen Elektroden-Trägerteil 22 mit Wellfedern 23 versehen werden. Durch ein Langloch im Rechteckprofil hält die Stütze 21 einerseits die Verbindung zwischen der Außenwand 2 und dem Rechteckrohr 22, welches das eigentliche Elektrodenteil 24 trägt, andererseits sind jedoch die beiden Teile ausreichend gegeneinander verschieblich.

Gemäß einer in der FIG nicht dargestellten zweiten grundsätzlichen Ausführungsform der Erfindung kann der Resonator auch als interner Resonator ausgebildet sein, bei dem mindestens zwei Abstandsstäbe teilweise innerhalb der als Hohlprofil ausgebildeten Basiselektrode verlaufen. Dadurch kann der Resonator innerhalb des vakuumdichten Gehäuses angeordnet werden, was weniger aufwendig ist. Außerdem können der erste Resonatorspiegel, die Abstandsstäbe, ein außerhalb der Basiselektrode mit den Abstandsstäben verbundener Kupferverbindungskörper und der darauf befestigte zweite Resonatorspiegel mittels eines durchgehenden, gemeinsamen Kühlkreislaufes gekühlt werden. Die Abstandsstäbe sollten in der Nähe des zweiten Resonatorspiegels mit einer Haltefeder an das Elektrodenprofil gekoppelt sein. Die Haltefeder kann als Blattfeder ausgeführt sein und erlaubt Bewegungen in axialer Richtung der Abstandsstäbe relativ zum Elektrodenprofil, verhindert aber Bewegungen in radialer Richtung. Um die Resonanzfrequenzen der Abstandsstäbe bei Anregungen in radialer Richtung zu erhöhen, können weitere Haltefedern zwischen Elektrodenprofil und Abstandsstäbe angebracht werden.

## Patentansprüche

1. Hochfrequenzangeregter diffusionsgekühlter Bandleiterlaser mit zwei mit Mitteln zur Kühlung (7, 8) und mit Mitteln zur gegenseitigen Fixierung (6) versehenen Metallelektroden (4, 5), zwischen denen ein Entladungsspalt gebildet ist, mit einem instabilen Resonator, dessen erster Resonatorspiegel (8) mit der Basiselektrode fest verbunden ist, mit einem aus einer ersten und zweiten Stirnplatte (1, 3) und einer damit vakuumdicht verbundenen Außenwand (2) zusammengesetzten Gehäuse, wobei die Basiselektrode (4) mit der ersten Stirnplatte (1) fest verbunden ist, **dadurch gekennzeichnet**, daß mindestens zwei Abstandsstäbe (12) den invarianten Abstand der beiden gegenüberliegenden, mit den Abstandsstäben (12) mittelbar fest verbundenen Resonatorspiegel (9, 10) definieren und die Abstandsstäbe (12) kühlmitteldurchströmt sind.

2. Bandleiterlaser nach Anspruch 1, bei dem die Abstandsstäbe (12) innerhalb der als Hohlprofil ausgebildeten Basiselektrode (4) verlaufen.

3. Bandleiterlaser nach Anspruch 2, bei dem der erste Resonatorspiegel (9), die Abstandsstäbe (12), ein außerhalb der Basiselektrode (4) mit den Abstandsstäben (12) verbundener Verbindungskörper und der darauf befestigte zweite Resonatorspiegel (10) mittels eines durchgehenden, gemeinsamen Kühlkreislaufes gekühlt werden.

4. Bandleiterlaser nach Anspruch 2 oder 3, bei dem die Abstandsstäbe (12) an mindestens einer Stelle, vorzugsweise in der Nähe des zweiten Resonatorspiegels (10), mittels einer Haltefeder, die nur Bewegungen in axialer Richtung erlaubt, mit der Basiselektrode (4) verbunden sind.

5. Bandleiterlaser nach Anspruch 1 bis 4, bei dem die Abstandsstäbe (12) jeweils aus einem Invar-Hohlstab (13) und mindestens einem, vorzugsweise zwei Metallrohren (14) zusammengesetzt sind, wobei alle Teile eine definierte Länge und einen definierten Längenausdehnungskoeffizienten aufweisen.

6. Bandleiterlaser nach Anspruch 1 oder 5, bei dem die Basiselektrode (4) gegenüber der zweiten Stirnplatte (3) in axialer Richtung beweglich, in radialer Richtung aber geführt ist, bei dem die Abstandsstäbe (12) ohne feste Verbindung durch die zweite Stirnplatte (3) hindurchgeführt und fest mit einem dahinter angeordneten Justierflansch (11) verbunden sind, der von der zweiten Stirnplatte (3) durch einen Dehnungsspalt (15) getrennt ist, und bei dem der zweite Resonatorspiegel (10) mit dem Justierflansch (11) fest verbunden und in einer definierten Lage zum ersten Resonatorspiegel (9) gehalten ist.

7. Bandleiterlaser nach Anspruch 1, 5 oder 6, bei dem eine vakuumdichte Verbindung zwischen der gegenüber dem zweiten Resonatorspiegel (10) zum Gehäuseinneren hin durchbrochenen zweiten Stirnplatte (3) und dem Justierflansch (11) vorzugsweise dem zweiten Resonatorspiegel (10), durch einen dehnbaren Metallbalg (18) gebildet ist.

8. Bandleiterlaser nach Anspruch 7, bei dem zusätzlich zum Balg (18) mindestens ein Paßstift (19) zwischen der zweiten Stirnplatte (3) und dem Justierflansch (11) vorgesehen ist und diese zweite Stirnplatte (3) in axialer Richtung gegen den feststehenden Justierflansch (11) beweglich ist.

9. Bandleiterlaser nach Anspruch 7, bei dem zusätzlich zum Balg (18) eine zwischen dem Justierflansch (11) und der zweiten Stirnplatte (3) angeordnete und sie an versetzten Stellen berührende Haltefeder vorgesehen ist.

10. Bandleiterlaser nach einem der Ansprüche 1 bis 9, bei dem die Basiselektrode (4) gegenüber der zweiten Stirnplatte (3) in radialer Richtung durch eine mit der Außenwand (2) fest und mit der Basiselektrode (4) in axialer Richtung verschieblich verbundene Stütze (21) geführt ist.

11. Bandleiterlaser nach einem der Ansprüche 1 bis 10, bei dem der erste Resonatorspiegel (9) als zylindrische Spiegelfläche ausgebildet ist und, nahe der ersten Stirnplatte (1), senkrecht mit einer Toleranz von ± 5 Winkelsekunden auf der Basiselektrode (4) steht.

12. Bandleiterlaser nach einem der Ansprüche 1 bis 11, bei dem der zweite Resonatorspiegel (10) justierbar ausgebildet und auf eine für den Laserbetrieb mit dem ersten Resonatorspiegel (9) optimale Lage einjustiert ist.

13. Bandleiterlaser nach einem der Anspruche 5 bis 12, bei dem das Metallrohr (14) als Edelstahlrohr ausgebildet ist.

## Claims

1. Radio-frequency-excited, diffusion-cooled stripline laser having two metal electrodes (4, 5), which are provided with means for cooling (7, 8) and with means for mutual fixing (6) and between which a discharge gap is formed, having an unstable resonator whose first resonator mirror (9) is firmly connected to the base electrode, having a housing which is composed of a first and a second end plate (1, 3) and an outer wall (2) which is connected thereto in a vacuum-tight manner, the base electrode (4) being firmly connected to the first end plate (1), characterized in that at least two spacer rods (12) define the invariant separation between the two opposite resonator mirrors (9, 10) which are directly firmly connected to the spacer rods (12), and cooling medium flows through the spacer rods (12).

2. Stripline laser according to Claim 1, in the case of which the spacer rods (12) run within the base electrode (4) which is designed as a hollow profile.

3. Stripline laser according to Claim 2, in the case of which the first resonator mirror (9), the spacer rods (12), a connecting body which is connected outside the base electrode (4) to the spacer rods (12), and the second resonator mirror (10) which is mounted thereon are cooled by means of a continuous, common cooling circuit.

4. Stripline laser according to Claim 2 or 3, in the case of which the spacer rods (12) are connected to the base electrode (4) at at least one point, preferably in the vicinity of the second resonator mirror (10), by means of a retaining spring which permits movements only in the axial direction.

5. Stripline laser according to Claims 1 to 4, in the case of which the spacer rods (12) are in each case composed of an Invar hollow rod (13) and at least one, preferably two, metal tubes (14), all parts having a defined length and a defined longitudinal coefficient of expansion.

6. Stripline laser according to Claim 1 or 5, in the case of which the base electrode (4) can move with respect to the second end plate (3) in the axial direction but is guided in the radial direction, in the case of which the spacer rods (12) are passed through the second end plate (3) without any firm connection and are firmly connected to an adjusting flange (11) which is arranged behind said second end plate (3) and is separated from the second end plate (3) by means of an expansion gap (15), and in the case of which the second resonator mirror (l0) is firmly connected to the adjusting flange (11) and is held in a defined position with respect to the first resonator mirror (9).

7. Stripline laser according to Claim 1, 5 or 6, in the case of which a vacuum-tight connection is formed between the second end plate (3), which is interrupted opposite the second resonator mirror (10) towards the housing interior, and the adjusting flange (11), preferably the second resonator mirror (10), by means of an expandable metal bellows (18).

8. Stripline laser according to Claim 7, in the case of which, in addition to the bellows (18), at least one alignment pin (19) is provided between the second end plate (3) and the adjusting flange (11), and this second end plate (3) can move in the axial direction with respect to the stationary adjusting flange (11).

9. Stripline laser according to Claim 7, in the case of which, in addition to the bellows (18), a retaining spring is provided which is arranged between the adjusting flange (11) and the second end plate (3) and touches the latter at offset points.

10. Stripline laser according to one of Claims 1 to 9, in the case of which the base electrode (4) is guided with respect to the second end plate (3) in the radial direction by means of a support (21) which is firmly connected to the outer wall (2) and is connected to the base electrode (4) such that it can be displaced in the axial direction.

11. Stripline laser according to one of Claims 1 to 10, in the case of which the first resonator mirror (9) is designed as a cylindrical mirror surface and, close to the first end plate (1), is at right angles to the base electrode (4) with a tolerance of ± 5 angular seconds.

12. Stripline laser according to one of Claims 1 to 11, in the case of which the second resonator mirror (10) is designed to be adjustable and is adjusted to a position which is optimized for laser operation with the first resonator mirror (9).

13. Stripline laser according to one of Claims 5 to 12, in the case of which the metal tube (14) is designed as a stainless-steel tube.

## Revendications

1. Laser à ruban excité en haute fréquence et refroidi par diffusion, comportant deux électrodes métalliques (4,5) qui comportent des moyens de refroidissement (7,8) et des moyens de fixation mutuelle (6), une fente de décharge étant formée entre elles, et un résonateur instable, dont le premier miroir (8) est relié fixement à l'électrode de base, et un boîtier constitué par l'assemblage de première et seconde plaques frontales (1,3) et d'une paroi extérieure (2) reliée à ces plaques d'une manière étanche au vide, l'électrode de base (4) étant reliée de façon fixe à la première plaque frontale (1), caractérisé par le fait qu'au moins deux barres entretoises (12) définissent la distance invariable entre les deux miroirs (9,10) de cavité résonnante, qui se font face et sont reliés indirectement de façon fixe aux barres entretoises (12) et que les barres entretoises (12) sont traversées par le fluide de refroidissement.

2. Laser à ruban suivant la revendication 1, dans lequel les barres entretoises (12) s'étendent à l'intérieur de l'électrode de base (4) agencée sous la forme d'un profilé creux.

3. Laser à ruban suivant la revendication 2, dans lequel le premier miroir (9) du résonateur, les barres entretoises (12), un corps de liaison, qui est relié aux barres entretoises (12) à l'extérieur de l'électrode de base (4), et le second miroir (10) du résonateur, qui est fixé sur ce corps, sont refroidis au moyen d'un circuit continu commun de refroidissement.

4. Laser à ruban suivant la revendication 2 ou 3, dans lequel les barres entretoises (12) sont reliées à l'électrode de base (4) en au moins un emplacement, de préférence à proximité du second miroir (10) du résonateur, à l'aide d'un ressort de maintien, qui permet uniquement des déplacements dans la direction axiale.

5. Laser à ruban suivant les revendications 1 à 4, dans lequel chacune des barres entretoises (12) est formée par assemblage d'une barre creuse en Invar (13) et d'au moins un et de préférence de deux tubes métalliques (14), toutes les parties étant de longueur définie et ayant un coefficient de dilatation longitudinal défini.

6. Laser à ruban suivant la revendication 1 ou 5, dans lequel l'électrode de base est mobile par rapport à la seconde plaque frontale dans une direction axiale (3), mais est guidée dans une direction radiale, et dans lequel les barres entretoises (12) traversent la seconde plaque frontale (3) sans aucune liaison fixe et sont reliées de façon fixe à une bride d'ajustement (11) disposée en arrière de cette seconde plaque frontale et qui est séparée de cette dernière par une fente de dilatation (15), et dans lequel le second miroir (10) du résonateur est relié de façon fixe à la bride d'ajustement (11) et est retenu dans une position définie par rapport au premier miroir (9) du résonateur.

7. Laser à ruban suivant la revendication 1,5 ou 6, dans lequel une liaison étanche au vide est formée entre la seconde plaque frontale (3), qui est percée en direction de l'intérieur du boîtier, et qui fait face au second miroir (10) du résonateur et la bride d'ajustement (11), de préférence le second miroir (10) du résonateur, par un soufflet métallique extensible (18).

8. Laser à ruban suivant la revendication 7, dans lequel en plus du soufflet (18), au moins un goujon d'assemblage (19) est prévu entre la seconde plaque frontale (3) et la bride d'ajustement (11), et cette seconde plaque frontale (3) est amovible dans une direction axiale vers la bride fixe d'ajustement (11) .

9. Laser à ruban suivant la revendication 7, dans lequel en plus du soufflet (18), il est prévu un ressort de retenue, qui est disposé entre la bride d'ajustement (11) et la seconde plaque frontale (3) et qui est en contact avec cette plaque en des emplacements décalés.

10. Laser à ruban suivant l'une des revendications 1 à 9, dans lequel l'électrode de base (4) est guidée dans une direction radiale, par rapport à la seconde plaque frontale (3), au moyen d'un support (21) qui est relié de manière amovible à l'électrode de base (4) suivant une direction axiale.

11. Laser à ruban suivant l'une des revendications 1 à 10, dans lequel le premier miroir (9) du résonateur est agencé sous la forme d'une surface réfléchissante cylindrique et, à proximité de la première plaque frontale (1), repose perpendiculairement, avec une tolérance de ± 5 seconde d'angle, sur l'électrode de base (4).

12. Laser à ruban suivant l'une des revendications 1 à 11, dans lequel le second miroir (10) du résonateur est réalisé de manière à être ajustable et est ajusté dans une position, qui est optimale pour le fonctionnement du laser avec le premier miroir (9) du résonateur.

13. Laser à ruban suivant l'une des revendications 5 à 12, dans lequel le tube métallique (14) est réalisé sous la forme d'un tube en acier spécial.
